# EUROPÄISCHE PATENTSCHRIFT

(11) **EP 1 213 519 B1**
(45) Veröffentlichungstag und Bekanntmachung des Hinweises auf die Patenterteilung: **24.05.2006**
(21) Anmeldenummer: 01203472.4
(22) Anmeldetag: 14.09.2001
(51) Int. Cl.: F16K 27/02, F16K 11/087

(54) **Ventil, insbesondere Heizkörperventil**
Radiator valve
Soupape de radiateur

(30) Priorität: 09.12.2000 DE 10061441
(43) Veröffentlichungstag der Anmeldung: 12.06.2002
(73) Patentinhaber: Danfoss A/S, 6430 Nordborg (DK)
(72) Erfinder: Iversen, Finn, 8680 Ry (DK)

(56) Entgegenhaltungen:
- DE-B- 1 139 707
- DE-C- 24 398
- FR-A- 902 355
- FR-A- 2 232 716

## Beschreibung

Die Erfindung betrifft ein Ventil, insbesondere Heizkörperventil, mit einem Ventilgehäuse, das einen Einlaßanschluß und einen Auslaßanschluß aufweist, wobei zwischen dem Einlaßanschluß und dem Auslaßanschluß eine Absperreinrichtung mit einem Ventilelement und einem Ventilsitz angeordnet ist, bei dem in einem im Ventilgehäuse angeordneten Sitzgehäuse ein Zulaufkanal, dessen eines Ende dem Ventilsitz zugeordnet ist, und ein Ablaufkanal ausgebildet sind, wobei das Sitzgehäuse im Ventilgehäuse zwischen einer ersten Position, in der der Zulaufkanal mit dem Einlaßanschluß und der Ablaufkanal mit dem Auslaßanschluß in Verbindung stehen, und einer zweiten Position, in der der Zulaufkanal mit dem Auslaßanschluß und der Ablaufkanal mit dem Einlaßanschluß in Verbindung stehen, verdrehbar ist.

Ein solches Ventil ist bekannt aus FR-A-902.355. Dieses Dokument zeigt ein manuell bedientes Ventil mit einem Einlass 2 und einem Auslass 3, zwischen denen sich ein Ventilsitz 14 befindet, der mit einem Ventilkegel 15 zusammenwirkt. Der Ventileinsatz 4 ist hauptsächlich als konischer Zylinder ausgebildet. Der Ventilsitz kann im Ventilgehäuse gedreht werden, so dass es möglich wird den Kanal 13 im Ventileinsatz mit dem Einlass 2 oder dem Auslass 3 zu verbinden.

Ein weiteres derartiges als Heizkörperventil ausgebildetes Ventil ist aus WO 99/22282 bekannt.

Üblicherweise ist bei einem derartigen Heizkörperventil die Durchströmrichtung vorgegeben. Diese Richtung ist vielfach mit einem Pfeil auf der Außenseite des Gehäuses markiert. In manchen Fällen ergibt sie sich aber auch nur aus einer Einbauanleitung. Die Durchströmrichtung sollte beachtet werden, um Störungen zu vermeiden, die sich vor allem durch Geräusche bemerkbar machen. Normalerweise ist die ventilsitzseitige Seite der Absperreinrichtung mit dem Einlaßanschluß und die ventilelementseitige Seite der Absperreinrichtung mit dem Auslaßanschluß verbunden. Wenn das Ventilelement auf den Ventilsitz zu bewegt wird, dann bewegt sie sich gegen das zuströmende Wasser. Es findet eine allmähliche Drosselung des durchströmenden Wassers statt. Bei dieser Betriebsweise ergeben sich normalerweise keine Probleme.

Wenn das Ventil hingegen falsch angeschlossen ist, d.h. die Speiseleitung eines Heizungssystem mit dem Auslaßanschluß verbunden wird, dann strömt das Wasser über das Ventilelement zum Ventilsitz und von dort in den Einlaßanschluß. Wenn das Ventil schließt, wird das Ventilelement auf den Ventilsitz zu bewegt. Wenn der Spalt zwischen dem Ventilelement und dem Ventilsitz eine gewisse Größe unterschreitet, dann schließt das Ventilelement schlagartig, was einen ebenso plötzlichen Druckanstieg am Auslaßanschluß zur Folge hat. Dieser Druckanstieg äußert sich in einem sogenannten Wasserschlag, der nicht nur unangenehme Geräusche zur Folge hat, sondern auch Beschädigungen im Leitungssystem hervorrufen kann. Dieser Wasserschlag kann auch durch einen externen Impuls ausgelöst werden, beispielsweise durch ein anderes Ventil, das plötzlich schließt oder öffnet, eine Pumpe, die anläuft oder stoppt, oder anderes. Diese Ursachen, die noch nicht alle restlos geklärt sind, sind besonders dann kritisch, wenn das Ventil falsch montiert ist.

Die Gefahr einer Fehlmontage von Heizkörperventilen ist nicht nur aufgrund von mangelnden Qualifikationen des Montagepersonals gegeben, sondern auch dann, wenn man in älteren Häusern oder Anlagen nicht mehr genau feststellen kann, welche Leitung zum Zufluß und welche zum Abfluß des Heizwassers verwendet wird.

Der Erfindung liegt die Aufgabe zugrunde, ein Ventil unabhängig von der Durchströmrichtung betreiben zu können.

Diese Aufgabe wird bei einem Ventil der eingangs genannten Art dadurch gelöst, daß daß das Sitzgehäuse zumindest an seinen Lagerflächen als Kugelkörper ausgebildet ist, der im Ventilgehäuse verdrehbar ist.

Mit dieser Ausgestaltung kann man den Strömungsweg der Heizflüssigkeit durch das Ventil immer so einstellen, daß das Ventilelement durch den Ventilsitz hindurch angeströmt wird. Wenn man feststellt, daß das nicht der Fall ist, d.h. wenn der Ventilsitz über das Ventilelement hinweg angeströmt wird, dann reicht es aus, das Sitzgehäuse im Ventilgehäuse zu verdrehen, um wieder die richtigen Verhältnisse zu schaffen. Dadurch, daß beide Kanäle, d.h. der Zulaufkanal und der Ablaufkanal im Sitzgehäuse angeordnet sind, wird unabhängig von der Gestaltung des Ventilgehäuses sichergestellt, daß die Heizflüssigkeit immer auf dem gewünschten Weg durch das Ventil fließt. Dies gilt sowohl bei der Durchströmung in der einen Richtung als auch bei der Durchströmung in der anderen Richtung. Die Abdichtung ist relativ einfach, weil im Grunde genommen nur das Sitzgehäuse gegenüber dem Ventilgehäuse abgedichtet werden muß. Ausserdem erreicht man, dass das Ventil im Hinblick auf die Verstellbarkeit des Sitzgehäuses sozusagen als Kugelventil betrachtet werden kann. Kugelventile haben sich seit langem bewährt. Sie sind zuverlässig und relativ leicht abzudichten. Durch die Ausbildung als Kugelkörper läßt sich das Sitzgehäuse leicht im Ventilgehäuse verdrehen.

Vorzugsweise ist der Ventilsitz durch das eine Ende des Zulaufkanals gebildet. Es reicht also aus, den Sitzkörper im Bereich der Mündung des Zulaufkanals zu bearbeiten, falls erforderlich, um eine Fläche auszubilden, an der das Ventilelement dichtend anliegen kann. Weitere Maßnahmen sind nicht erforderlich, so daß der Aufwand beim Herstellen gering gehalten werden kann. Man kann natürlich auch den Ventilsitz noch im Ventilgehäuse anordnen. In diesem Fall kann eine zusätzliche Abdichtung zwischen dem dem Ventilsitz zugeordneten Ende des Zulaufkanals und einem Ventilgehäuseteil notwendig werden, an dem der Ventilsitz angeordnet ist.

Vorteilhafterweise ist das Sitzgehäuse um die Mittelachse des Ventilsitzes verdrehbar. Damit ändert sich die Position des Ventilsitzes beim Verdrehen nicht. Unabhängig davon, in welche Position das Sitzgehäuse verdreht worden ist, ist sichergestellt, daß der Ventilsitz dem Ventilelement gegenüberliegt.

Hierbei ist besonders bevorzugt, daß der Ventilsitz kreisrund ist. In diesem Fall spielt eine exakte Ausrichtung des Sitzgehäuses im Ventilgehäuse nach dem Verdrehen keine entscheidende Rolle mehr, d.h. das Zusammenwirken von Ventilelement und Ventilsitz ist auch dann sichergestellt, wenn das Sitzgehäuse nicht um 180°, sondern beispielsweise nur um 175° verdreht worden ist.

Vorteilhafterweise weist der Ablaufkanal eine Mündung in einer Fläche des Sitzgehäuses auf, in der auch der Ventilsitz angeordnet ist. Dies vereinfacht die Strömungsverhältnisse. Die Heizflüssigkeit kann dann aus dem Ventilsitz austreten und ohne größere Wege innerhalb des Ventilgehäuses in die Mündung des Ablaufkanals eintreten. Dadurch werden Strömungsverluste und die Gefahr einer Geräuschbildung klein gehalten.

Bevorzugterweise umgibt die Mündung den Ventilsitz auf einem Teil seines Umfangs. Dies stellt eine weitere Verbesserung für den Strömungsweg der Heizungsflüssigkeit dar. Es existiert nur eine kurze freie Strömungslänge außerhalb des Sitzgehäuses. Im übrigen kann man den Weg der Heizflüssigkeit durch das Ventil durch die Ausgestaltung von Einlaßkanal und Auslaßkanal relativ genau vorgeben. Darüber hinaus kann man mit dieser Maßnahme die Mündung des Auslaßkanals mit einer relativ großen Fläche versehen, ohne daß man das Sitzgehäuse entsprechend vergrößern müßte. Auch dadurch werden Strömungsverluste klein gehalten.

Hierbei ist besonders bevorzugt, daß der Kugelkörper einen zylinderförmigen Fortsatz aufweist, an dessen Stirnseite der Ventilsitz und die Mündung angeordnet sind. Mit Hilfe des zylinderförmigen Fortsatzes läßt sich eine ebene Fläche schaffen, nämlich die Fläche an der Stirnseite. Das Ventilelement läßt sich dann mit geringem Aufwand fertigen. Es kann ebenfalls eben ausgebildet sein. Trotzdem erzielt man eine ausreichend gute Dichtung, wenn das Ventil geschlossen worden ist.

Bevorzugterweise weist der Kugelkörper eine Drehmomentangriffsanordnung auf. Damit läßt sich das Sitzgehäuse für die entsprechende Durchströmrichtung von außen einstellen. Der Bediener muß lediglich an der Drehmomentangriffsanordnung angreifen, um die zum Verdrehen des Kugelkörpers erforderlichen Momente einzuleiten.

Hierbei ist besonders bevorzugt, daß die Drehmomentangriffsanordnung als Hohlzylinder mit zumindest einem axial verlaufenden Schlitz ausgebildet ist. Der Hohlzylinder kann dann gleichzeitig zur Führung des Sitzgehäuses im Ventilgehäuse verwendet werden. Weiterhin bringt der Hohlzylinder die Drehmomentangriffsanordnung weiter nach außen, so daß in der Regel keine Spezialwerkzeuge erforderlich sind, um das Sitzgehäuse im Ventilgehäuse zu verdrehen.

Bevorzugterweise sind sowohl der Ventilsitz als auch die Mündung radial innerhalb des Hohlzylinders angeordnet. Auch dies vereinfacht den Strömungsweg. Die Heizflüssigkeit muß keine zusätzlichen Bauelemente passieren, um vom Einlaßkanal in den Auslaßkanal zu gelangen.

Vorzugsweise ist das Sitzgehäuse im Ventilgehäuse auf zwei Ringdichtungen gelagert. Diese Ausbildung hat zwei Vorteile. Da die Ringdichtungen eine gewisse Elastizität haben, können sie zu einer dämpfenden Lagerung des Sitzgehäuses im Ventilgehäuse verwendet werden. Darüber hinaus dichten sie in der Lagerfläche das Sitzgehäuse gegenüber dem Ventilgehäuse ab.

Die Erfindung wird im folgenden anhand eines bevorzugten Ausführungsbeispiels in Verbindung mit der Zeichnung näher beschrieben. Hierin zeigen:
- Fig. 1: einen schematischen Längsschnitt durch ein Heizkörperventil und
- Fig. 2: eine schematische Draufsicht auf ein Sitzgehäuse.

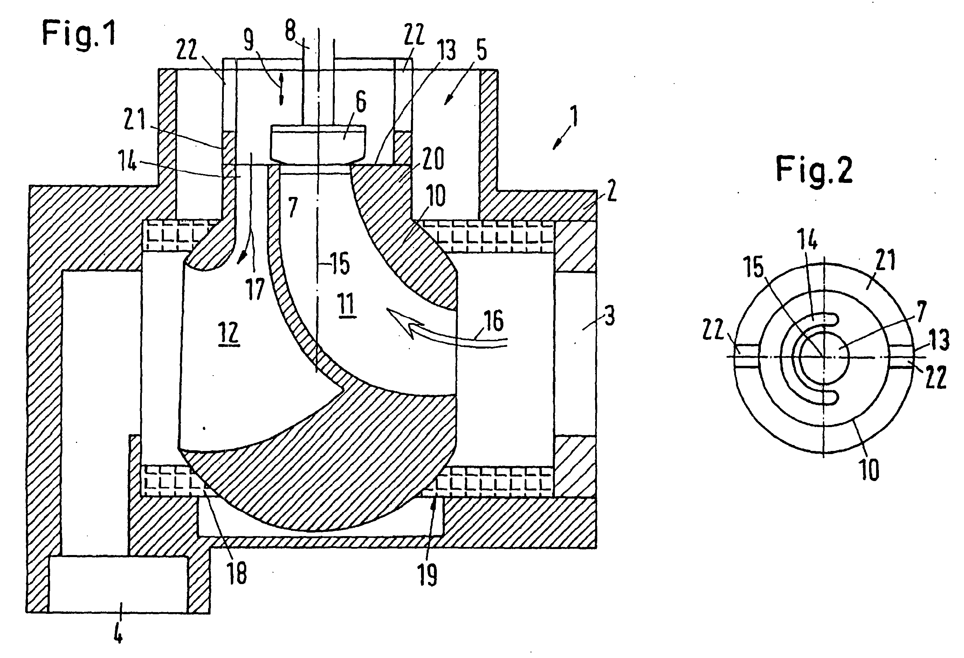

Fig. 1 zeigt ein Heizkörperventil 1 mit einem Ventilgehäuse 2, das einen Einlaßanschluß 3 und einen Auslaßanschluß 4 aufweist. Dargestellt ist eine Ausgestaltung, bei der der Einlaßanschluß 3 und der Auslaßanschluß 4 in der Zeichenebene um 90° versetzt zueinander angeordnet sind. Es ist jedoch klar, daß Einlaßanschluß 3 und Auslaßanschluß 4 in einer geraden Linie ausgerichtet sein können.

Die Bezeichnungen "Einlaßanschluß" und "Auslaßanschluß" werden lediglich zum Zwecke der Unterscheidung der beiden Anschlüsse 3, 4 gewählt. Wie aus dem nachfolgenden zu erkennen sein wird, bedeutet diese Bezeichnung nicht zwangsläufig, daß eine Heizflüssigkeit tatsächlich durch den Einlaßanschluß 3 eintreten und durch den Auslaßanschluß 4 austreten muß. Die Durchströmrichtung kann auch umgekehrt sein.

Zwischen dem Einlaßanschluß 3 und dem Auslaßanschluß 4 ist eine Absperreinrichtung 5 angeordnet, die ein Ventilelement 6 und einen Ventilsitz 7 aufweist. Das Ventilelement 6 ist an einer Spindel 8 angeordnet, mit deren Hilfe es in Richtung eines Doppelpfeiles 9 vom Ventilsitz 7 weg oder auf den Ventilsitz 7 zu bewegt werden kann. Die Spindel 8 kann von einer nicht näher dargestellten Betätigungseinrichtung, beispielsweise einem thermostatischen Ventilaufsatz oder einem Stellmotor bewegt werden. Das Ventilelement 6 kann in dem Bereich, in dem es mit dem Ventilsitz 7 zusammenwirkt, eine konische Abschrägung aufweisen, so daß eine Kante des Ventilsitzes 7 die eigentliche Dichtung bildet, wenn das Ventil geschlossen ist.

Der Ventilsitz 7 ist an einem Sitzgehäuse 10 angeordnet, das im Ventilgehäuse 2 verdrehbar gelagert ist.

Das Sitzgehäuse weist einen Zulaufkanal 11 und einen Ablaufkanal 12 auf, d.h. beide Kanäle 11, 12 sind im Innern des Sitzgehäuses 10 untergebracht. Hierbei bildet die Mündung des Zulaufkanals 11 in einer Stirnfläche 13 den Ventilsitz 7. Gegebenenfalls kann die Umgebung des Ventilsitzes 7 noch etwas bearbeitet sein, um eine dichtende Anlage des Ventilelements 6 zu ermöglichen. Das andere Ende des Zulaufkanals 11 tritt praktisch unter einem rechten Winkel zum Ventilsitz 7 aus dem Sitzgehäuse 10 aus.

Der Ablaufkanal 12 weist eine Mündung 14 auf, die ebenfalls in der Stirnseite 13 angeordnet ist und, wie aus Fig. 2 zu erkennen ist, den Ventilsitz 7 über etwas mehr als 180° umgibt. Das andere Ende des Ablaufkanals 12 tritt ebenfalls etwa unter einem rechten Winkel zum Ventilsitz aus dem Sitzgehäuse 10 aus, so daß die beiden Enden von Zulaufkanal 11 und Ablaufkanal 12, die nicht in der Stirnseite 13 liegen, einander etwa diametral gegenüber stehen.

Der Ventilsitz ist, wie aus Fig. 2 zu erkennen ist, kreisrund. Das Sitzgehäuse 10 ist um die Achse 15 des Ventilsitzes 7 verdrehbar. Dabei ergibt sich keine Änderung der Zuordnung von Ventilelement 6 zum Ventilsitz 7. Man kann allerdings die Zuordnung der jeweils anderen Enden von Zulaufkanal 11 und Ablaufkanal 12 zum Einlaßanschluß 3 bzw. zum Auslaßanschluß 4 ändern.

In der dargestellten Position des Sitzgehäuses 10 kann die Heizflüssigkeit durch den Einlaßanschluß 3 eintreten und durch den Zulaufkanal 11 zum Ventilsitz 7 strömen, um das Ventilelement 6 durch den Ventilsitz 7 hindurch anströmen zu können. Dies ist durch einen Pfeil 16 dargestellt. Wenn die Heizflüssigkeit durch den Spalt zwischen dem Ventilelement 6 und dem Ventilsitz 7 hindurchgetreten ist, dann kann sie durch die Mündung 14 des Ablaufkanals 12 abfließen, wie dies durch einen Pfeil 17 dargestellt ist.

Von dem Ablaufkanal 12 gelangt sie dann in den Auslaßanschluß 4.

Wenn hingegen das Sitzgehäuse 10 um 180° um die Achse 15 verdreht worden ist, dann gelangt Flüssigkeit vom Auslaßanschluß 4 in den Zulaufkanal 11 und aus dem Ablaufkanal 12 in den Einlaßanschluß 3.

Das Sitzgehäuse 10 ist in den Bereichen, in denen es im Ventilgehäuse 2 gelagert ist, als Kugelkörper ausgebildet. Zur Lagerung des Sitzgehäuses 10 im Ventilgehäuse 2 dienen zwei Ringdichtungen 18, 19, die beispielsweise als Teflon- oder Nylonpackungen ausgebildet sind. Der Sitzkörper 10 weist also in den Bereichen, mit denen er an den Ringdichtungen 18, 19 anliegt, eine kugelförmige Außenwand auf. An den Enden des Zulaufkanals 11 und des Ablaufkanals 12 kann das Sitzgehäuse 10 hingegen abgeflacht sein.

Das Sitzgehäuse 10 weist einen zylinderförmigen Fortsatz 20 auf, an dem die Stirnseite 13 ausgebildet ist. Der Fortsatz 20 wird am Umfang verlängert durch einen Hohlzylinder 21, in dem Schlitze 22 ausgebildet sind, die als Drehmomentangriffsanordnung verwendet werden können. In nicht näher dargestellter Weise ist der Hohlzylinder 21 im Ventilgehäuse 2 geführt, um die Ausrichtung des Sitzgehäuses 10 zum Ventilgehäuse 2 beibehalten zu können, auch wenn das Sitzgehäuse 10 im Ventilgehäuse 2 bewegt wird. Darüber hinaus ist in nicht näher dargestellter Weise dafür gesorgt, daß das Ventilgehäuse 2 geschlossen ist, so daß keine Heizflüssigkeit austreten kann. Gegebenenfalls muß das Ventilgehäuse 2 zum Verdrehen des Sitzgehäuses 10 geöffnet werden. Alternativ dazu ist der Hohlzylinder 21 geschlossen, so daß die Heizflüssigkeit auch bei geöffnetem Ventilgehäuse nicht austreten kann.

Wie aus Fig. 2 zu erkennen ist, ist sowohl der Ventilsitz 7 als auch die Mündung 14 des Ablaufkanals 12 innerhalb des Hohlzylinders 21 angeordnet. Die Heizflüssigkeit, die aus dem Ventilsitz 7 austritt, kann dementsprechend unmittelbar in die Mündung 14 des Ablaufkanals 12 eintreten. Damit werden Strömungsverluste klein gehalten. Außerdem ist die Abdichtung des Flüssigkeitsweges einfacher.

Wenn der Monteur nach der Montage feststellt, daß die Strömungsrichtung durch das Heizkörperventil falsch ist, d.h. das Ventilelement 6 nicht durch den Ventilsitz 7 hindurch angeströmt wird, dann greift er mit einem geeigneten Werkzeug in den Schlitzen 22 des Hohlzylinders 21 an und verdreht den Sitzkörper 10 um etwa 180°. Mit dieser einfachen Maßnahme wird die Strömungsrichtung wieder richtig gestellt.

Ein zusätzlicher Vorteil des dargestellten Ventils liegt darin, daß es auch als Absperrventil verwendet werden kann. Wenn beispielsweise die beiden Anschlüsse 3, 4 um 180° versetzt zueinander angeordnet sind, dann wird der Durchgang durch das Ventil blockiert, wenn das Sitzgehäuse nur um 90° verdreht wird. Bei einer Drehung um 90° ist weder der Zulaufkanal 11 noch der Ablaufkanal 12 in Verbindung mit einem der beiden Anschlüsse 3, 4.

Von der dargestellten Ausführungsform kann in vielerlei Hinsicht abgewichen werden. Man kann beispielsweise den Ventilsitz in einem ventilgehäusefesten Teil anordnen, wobei das Sitzgehäuse gegenüber dem Ventilsitz verdreht werden kann. Gegebenenfalls ist in diesem Fall eine zusätzliche Dichtung zwischen dem den Ventilsitz aufnehmenden Teil und dem Sitzgehäuse notwendig. In diesem Fall wird es auch günstig sein, wenn das Sitzgehäuse von der dem Ventilsitz gegenüberliegenden Seite aus verdreht werden kann.

## Patentansprüche

1. Ventil, insbesondere Heizkörperventil, mit einem Ventilgehäuse, das einen Einlaßanschluß (3) und einen Auslaßanschluß (4) aufweist, wobei zwischen dem Einlaßanschluß (3) und dem Auslaßanschluß (4) eine Absperreinrichtung (5) mit einem Ventilelement (6) und einem Ventilsitz (7) angeordnet ist, bei dem in einem im Ventilgehäuse (2) angeordneten Sitzgehäuse (10) ein Zulaufkanal (11), dessen eines Ende dem Ventilsitz (7) zugeordnet ist, und ein Ablaufkanal (12) ausgebildet sind, wobei das Sitzgehäuse (10) im Ventilgehäuse (2) zwischen einer ersten Position, in der der Zulaufkanal (11) mit dem Einlaßanschluß (3) und der Ablaufkanal (12) mit dem Auslaßanschluß (4) in Verbindung stehen, und einer zweiten Position, in der der Zulaufkanal (11) mit dem Auslaßanschluß (4) und der Ablaufkanal (12) mit dem Einlaßanschluß (3) in Verbindung stehen, verdrehbar ist, **dadurch gekennzeichnet, daß** das Sitzgehäuse (10) zumindest an seinen Lagerflächen als Kugelkörper ausgebildet ist, der im Ventilgehäuse (2) verdrehbar ist.

2. Ventil nach Anspruch 1, **dadurch gekennzeichnet, daß** der Ventilsitz (7) durch das eine Ende des Zulaufkanals (11) gebildet ist.

3. Ventil nach Anspruch 1 oder 2, **dadurch gekennzeichnet, daß** das Sitzgehäuse (10) um die Mittelachse (15) des Ventilsitzes (7) verdrehbar ist.

4. Ventil nach Anspruch 3, **dadurch gekennzeichnet, daß** der Ventilsitz (7) kreisrund ist.

5. Ventil nach einem der Ansprüche 1 bis 4, **dadurch gekennzeichnet, daß** der Ablaufkanal (12) eine Mündung (14) in einer Fläche (13) des Sitzgehäuses (10) aufweist, in der auch der Ventilsitz (7) angeordnet ist.

6. Ventil nach Anspruch 5, **dadurch gekennzeichnet, daß** die Mündung (14) den Ventilsitz (7) auf einem Teil seines Umfangs umgibt.

7. Ventil nach einem der Ansprüche 1 bis 6, **dadurch gekennzeichnet, daß** der Kugelkörper einen zylinderförmigen Fortsatz (20) aufweist, an dessen Stirnseite (13) der Ventilsitz (7) und die Mündung (14) angeordnet sind.

8. Ventil nach einem der Ansprüche 1 bis 7, **dadurch gekennzeichnet, daß** der Kugelkörper eine Drehmomentangriffsanordnung (22) aufweist.

9. Ventil nach Anspruch 8, **dadurch gekennzeichnet, daß** die Drehmomentangriffsanordnung als Hohlzylinder (21) mit zumindest einem axial verlaufenden Schlitz (22) ausgebildet ist.

10. Ventil nach Anspruch 9, **dadurch gekennzeichnet, daß** sowohl der Ventilsitz (7) als auch die Mündung (14) radial innerhalb des Hohlzylinders (21) angeordnet sind.

11. Ventil nach einem der Ansprüche 1 bis 10, **dadurch gekennzeichnet, daß** das Sitzgehäuse (10) im Ventilgehäuse (2) auf zwei Ringdichtungen (18, 19) gelagert ist.

## Claims

1. Valve, particularly radiator valve, with a valve housing, which has an inlet connection (3) and an outlet connection (4), a blocking device (5) with a valve element (6) and a valve seat (7) being located between the inlet connection (3) and the outlet connection (4), an inlet channel (11), whose one end is allocated to the valve seat (7), and an outlet channel (12) being formed in a seat housing (10) located in the valve housing (2), the seat housing (10) being rotatable in the valve housing (2) between a first position, in which the inlet channel (11) is connected with the inlet connection (3) and the outlet channel (12) is connected with the outlet connection (4), and a second position, in which the inlet channel (11) is connected with the outlet connection (4) and the outlet channel (12) is connected with the inlet connection (3), **characterised in that** at least the contact faces of the seat housing (10) have the shape of ball elements, which are rotatable in the valve housing (2).

2. Valve according to claim 1, **characterised in that** the valve seat (7) is formed by an end of the inlet channel (11).

3. Valve according to claim 1 or 2, **characterised in that** the seat housing (10) is rotatable around the central axis (15) of the valve seat (7).

4. Valve according to claim 3, **characterised in that** the valve seat (7) is circular.

5. Valve according to one of the claims 1 to 4, **characterised in that** the outlet channel (12) has an opening (14) into a surface (13) of the seat housing (10), in which surface also the valve seat (7) is located.

6. Valve according to claim 5, **characterised in that** the opening (14) surrounds the valve seat (7) on a part of its circumference.

7. Valve according to one of the claims 1 to 6, **characterised in that** the ball element has a cylinder-shaped extension (20), at whose front side (13) the valve seat (7) and the opening (14) are located.

8. Valve according to one of the claims 1 to 7, **characterised in that** the ball element has a rotation torque application arrangement (22).

9. Valve according to claim 8, **characterised in that** the rotation torque application arrangement has the form of a hollow cylinder (21) with at least one axially extending slot (22).

10. Valve according to claim 9, **characterised in that** both the valve seat (7) and the opening (14) are located radially inside the hollow cylinder (21).

11. Valve according to one of the claims 1 to 10, **characterised in that** the seat housing (10) is supported in the valve housing (2) on two annular sealings (18, 19).

## Revendications

1. Vanne, en particulier vanne de radiateur, comprenant un boîtier de vanne qui présente un raccord d'entrée (3) et un raccord de sortie (4), dans laquelle un moyen de fermeture (5) avec un élément de vanne (6) et un siège de vanne (7) est agencé entre le raccord d'entrée (3) et le raccord de sortie (4), dans laquelle, dans un boîtier de siège (10) agencé dans le boîtier de vanne (2) sont ménagés un canal d'amenée (11), dont une première extrémité est associée au siège de vanne (7), et un canal d'écoulement (12), et dans laquelle le boîtier de siège (10) est disposé en rotation dans le boîtier de vanne (2) entre une première position, dans laquelle le canal d'amenée (11) communique avec le raccord d'entrée (3) et le canal d'écoulement (12) communique avec le raccord de sortie (4), et une seconde position, dans laquelle le canal d'amenée (11) communique avec le raccord de sortie (4) et le canal d'écoulement (12) communique avec le raccord d'entrée (3), **caractérisée en ce que** le boîtier de siège (10) est réalisé, au moins au niveau de ses surfaces de montage, comme un corps sphérique, qui est disposé en rotation dans le boîtier de vanne (2).

2. Vanne selon la revendication 1, **caractérisée en ce que** le siège de vanne (7) est formé par ladite première extrémité du canal d'amenée (11).

3. Vanne selon la revendication 1 ou 2, **caractérisée en ce que** le boîtier de siège (10) est disposé en rotation autour de l'axe médian (15) du siège de vanne (7).

4. Vanne selon la revendication 3, **caractérisée en ce que** le siège de vanne (7) est circulaire.

5. Vanne selon l'une des revendications 1 à 4, **caractérisée en ce que** le canal d'écoulement (12) présente une embouchure (14) dans une surface (13) du boîtier de siège (10), dans laquelle est également disposé le siège de vanne (7).

6. Vanne selon la revendication 5, **caractérisée en ce que** l'embouchure (14) entoure le siège de vanne (7) sur une partie de sa circonférence.

7. Vanne selon l'une des revendications 1 à 6, **caractérisée en ce que** le corps sphérique comporte un prolongement cylindrique (20), le siège de vanne (7) et l'embouchure (14) étant agencés au niveau de la face frontale (13) de celui-ci.

8. Vanne selon l'une des revendications 1 à 7, **caractérisée en ce que** le corps sphérique présente un agencement (22) pour l'application d'un couple de rotation.

9. Vanne selon la revendication 8, **caractérisée en ce que** l'agencement pour l'application d'un couple de rotation est réalisé un comme un cylindre creux (21) avec au moins une fente (22) s'étendant axialement.

10. Vanne selon la revendication 9, **caractérisée en ce que** le siège de vanne (7) ainsi que l'embouchure (14) sont agencés radialement à l'intérieur du cylindre creux (21).

11. Vanne selon l'une des revendications 1 à 10, **caractérisée en ce que** le boîtier de siège (10) est monté dans le boîtier de vanne (2) sur deux joints annulaires (18, 19).
